# EUROPEAN PATENT SPECIFICATION

(11) **EP 0 384 049 B1**
(45) Date of publication and mention of the grant of the patent: **30.11.1994**
(21) Application number: 89301627.9
(22) Date of filing: 20.02.1989
(51) Int. Cl.: F16G 1/28, F16H 7/02

(54) **Power transmission belt and drive**
Treibriemen und Treibantrieb
Courroie de transmission de puissance et transmission

(43) Date of publication of application: 29.08.1990
(73) Proprietor: MITSUBOSHI BELTING LTD., Nagata-ku Kobe City Hyogo, pref. (JP)
(72) Inventor: Tanaka, Hiroyuki, Nishi-ku Kobe Hyogo (JP); Nagai, Takaji, Kita-ku Kobe Hyogo (JP); Hashimoto, Yasuhiro, Miki-shi Hyogo (JP); Kawai, Kazumi, Nishi-ku Kobe Hyogo (JP); Hirai, Hideo, Kakogawa-shi Hyogo (JP); Mizuno, Takahide,, Hyogo-ku, Kobe, Hyogo, (JP)
(74) Representative: Bond, Bentley George

(56) References cited:
- EP-A- 0 106 694
- EP-A- 0 327 873
- DE-A- 3 629 789
- US-A- 4 337 056
- US-A- 4 468 211
- PATENT ABSTRACTS OF JAPAN, vol. 11, no. 333 (M-637)[2780], 30th October 1987; & JP-A-62 113 939

## Description

### Technical Field

This invention relates to power transmission drives and in particular to toothed belts and pulleys used in such drives.

### Background Art

In the conventional toothed belt drive system, a flexible toothed belt is engaged with a pulley in complementary radially outwardly opening grooves thereof. A problem arises in such belt drives in that noise is produced by the belt teeth as they engage and disengage from the pulley during the operation of the drive.

One conventional form of toothed drive system utilizes pulley teeth having a trapezoidal cross section and complementary trapezoidal cross section pulley grooves.

A number of other tooth-and-pulley groove configurations such as disclosed in DE-A-3 629 789 have been utilized in an effort to abate the vexatious noise problem, but none has proven completely successful.

### Disclosure of Invention

The present invention comprehends an improved toothed belt and cooperating pulley drive system providing substantially improved noise abatement, with long, troublefree life in the use of the belt drive system in transmitting high loads.

The toothed belt drive system of the present invention permits the belt tooth to smoothly engage and disengage from the sidewalls of the pulley grooves, notwithstanding the transmission of high load forces therebetween, while effectively avoiding noise.

In the illustrated embodiments of the invention, the belt tooth has force-transmitting engagement with a portion of one sidewall surface of the pulley groove, while the opposite side of the belt tooth has clearance substantially along its entire length.

A clearance may be provided between the pulley and the belt tooth at the root portion of the belt tooth and at the distal inner end thereof.

The belt tooth, in one form, has a length greater than the depth of the pulley groove, whereby the belt tooth is under compression when fully received in the pulley groove, while yet maintaining the clearance between the nonforce-transmitting surface of the belt tooth and pulley groove sidewall.

The tooth-and-pulley groove constructions are such as to avoid rubbing of the root portion of the belt tooth with the pulley at the other end of the groove as the belt tooth is removed from the pulley in the operation of the drive.

By eliminating rubbing and excessive deflection of the belt tooth, a long, troublefree life of the belt under high loads is obtained, with minimum noise.

In the illustrated embodiment, the power transmission toothed belt includes a belt body defining a longitudinal pitch line, a plurality of longitudinally spaced teeth projecting inwardly from the body, each tooth being symmetrical about an axis perpendicular to the pitch line, each half of each tooth having a concave root surface defined by an arc of a circle, the bottom of the root surface defining a belt land line, a convex power transmitting surface extending inwardly from the root surface and being defined by an arc of a circle having a radius centered on the pitch line, and a convex tip surface extending inwardly from the power transmitting surface and being defined by an arc of a circle having a radius centered in the tooth and being smaller than the radius of the circle defining the power transmitting surface.

The power transmitting surface defines a junction with the root surface spaced inwardly from the belt land line approximately one-fourth the height of the tooth inwardly from the belt land line.

The power transmitting surface further defines a junction with the tip surface spaced inwardly from the belt land line in the range of approximately one-half to two-thirds the height of the tooth inwardly from the belt land line.

The power transmitting surface is substantially tangent to the tip surface at a junction of the power transmitting surface with the tip surface.

In the illustrated embodiment, the belt tooth is further defined by a flat distal inner end surface extending transversely to the tooth axis.

In one embodiment, the belt tooth is defined by an arcuate distal inner end surface extending transversely to the tooth axis.

The belt is utilized in a power transmission toothed belt device further including a pulley having a plurality of circumferential, radially outwardly opening grooves, each groove being symmetrical about a radial centerline, each half of each groove having a convex outer surface defined by an arc of a circle extending inwardly from a radially outer face line defined by the distal face of a land between successive pulley grooves, a concave sidewall surface extending inwardly from the outer surface and being defined by a radius centered on a line coincident with the pitch line of the belt when a belt tooth is fully meshed with the pulley in the groove, and a concave inner surface extending inwardly from the sidewall surface and being defined by an arc of a circle having a radius centered in the groove and being smaller than said radius of the circle defining the sidewall surface, the belt tooth and pulley groove being constructed such that the belt tooth root surface has clearance with the pulley groove outer surface, the belt tooth power transmitting surface has facial engagement with the pulley groove sidewall surface, and the belt tooth tip surface has clearance with the pulley groove inner surface inwardly from the sidewall surface when the belt tooth is fully received in the pulley groove with the belt tooth power transmitting surface engaging the pulley groove sidewall surface.

The radius of the circle defining the belt tooth power transmitting surface may be substantially equal to the radius of the circle defining the pulley groove sidewall surface.

The radius of the circle defining the belt tooth power transmitting surface may be smaller than the radius of the circle defining the pulley groove sidewall surface.

The radius of the circle defining the pulley groove inner surface may be greater than the radius of the circle defining the belt tooth tip surface.

The height of the belt tooth inwardly from the tooth belt land line is greater than the depth of the pulley groove inwardly from the tooth distal face line.

In the illustrated embodiment, the pulley groove further defines an outwardly convex bottom transverse surface.

The invention comprehends that the belt tooth and pulley groove be constructed such that the opposite side of the belt tooth is entirely spaced from the pulley groove surface when the power transmitting surface of one side of the belt tooth is engaged with the confronting pulley groove sidewall surface.

In one form, the invention comprehends the provision of the side surface of the pulley groove as including a planar surface extending inwardly from the convex outer surface thereof, the planar surface being defined by a tangent to the inner sidewall surface at a point thereon spaced inwardly from the face line substantially one-half the depth of the groove inwardly from the face line.

In the illustrated embodiment, the center of the arc defining the convex outer surface is spaced from the face line more than one-half the depth of the pulley groove from the face line.

The center of the pulley convex outer surface arc is spaced from the pulley groove radial centerline and the face line a distance greater than the spacing of the center of the belt tooth concave root surface from the pulley groove radial centerline and the face line respectively.

The radius of the arc defining the convex power transmitting surface has a length less than the width of the tooth as measured along the pitch line between the intersection therewith of the arcs defining the opposite power transmitting surfaces of the tooth.

The radius of the pulley convex outer surface arc is greater than the radius of the belt tooth concave root surface arc in the illustrated embodiment.

The belt tooth engages the pulley groove sidewall surface in entering into the pulley groove for transmission of drive force therebetween, and moves smoothly from the pulley groove without rubbing the sidewall of the belt tooth for improved freedom from wear and noise.

More specifically the invention comprehends a drive pulley having a plurality of circumferential radially outwardly opening grooves, each groove defining a radial centerline and being symmetrical about the centerline, the opposite halves of each groove at opposite sides of the centerline each having a convex outer surface defined by an arc of a circle extending inwardly from a radially outer face line defined by the distal face of a land between successive pulley grooves, a concave sidewall surface extending inwardly from the outer surface and being defined by a radius centered on a line coincident with said pitch line of the belt when a belt tooth is fully meshed with the pulley in the groove, and a concave inner surface extending inwardly from the sidewall surface and being defined by an arc of a circle having a radius centered in the groove and being smaller than the radius of the circle defining said sidewall surface.

Further more specifically the invention comprehends the further provision of a planar surface extending inwardly from the convex outer surface, said planar surface being defined by a tangent to said inner side wall surface at a point thereon spaced inwardly from said face line substantially one-half the depth of the groove inwardly from said face line.

The toothed belt power transmission drive system of the present invention is extremely simple and economical of construction, while yet providing the highly desirable features discussed above.

### Brief Description of the Drawing

Other features and advantages of the invention will be apparent from the following description taken in connection with the accompanying drawing wherein:
FIGURE 1 is a fragmentary side elevation of a power transmission belt embodying the invention;
FIGURE 2 is a fragmentary side elevation of a pulley embodying the invention;
FIGURE 3 is a fragmentary side elevation illustrating the meshing of the belt tooth with the pulley;
FIGURE 4 is a fragmentary side elevation showing a modified form of pulley embodying the invention;
FIGURE 5 is a side elevation illustrating the meshing of the belt of Figure 1 with the pulley of Figure 4; and
FIGURE 6 is a fragmentary side elevation illustrating a meshed association of a modified form of belt and pulley embodying the invention.

### Best Mode for Carrying Out the Invention

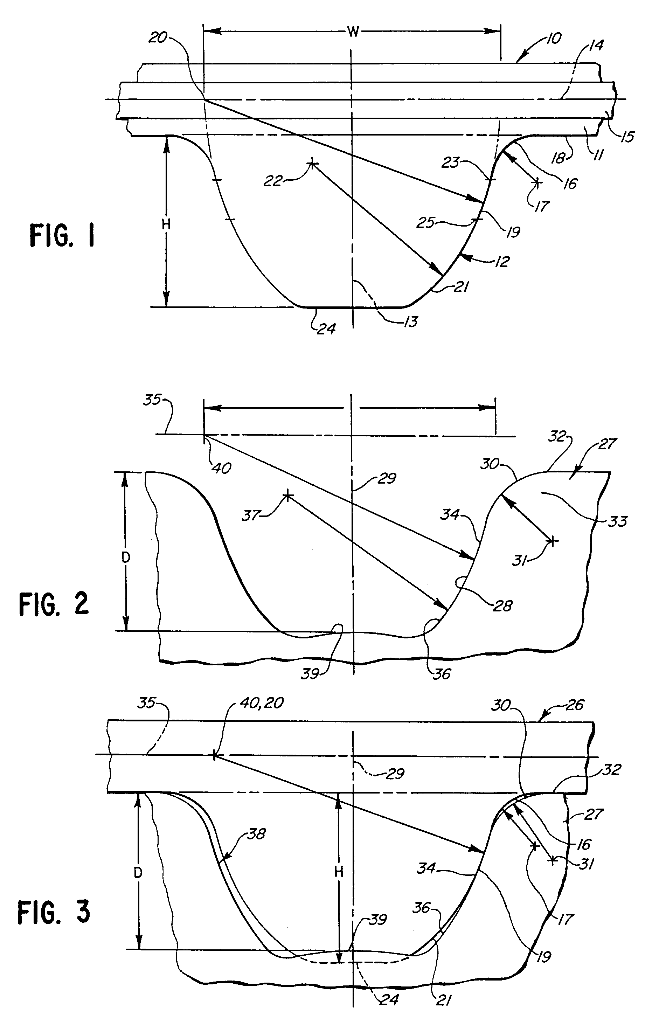

In the illustrative embodiment of the invention as disclosed in Figures 1-3 of the drawing, a power transmission belt generally designated 10 is shown to comprise a toothed power transmission belt having a body 11 and teeth 12 projecting inwardly from the body. Each tooth 12 is symmetrical about a centerline 13. The body defines a longitudinally extending pitch line 14. Conventional tensile cords 15 extend longitudinally of the belt along the pitch line. As shown, tooth axis 13 is perpendicular to the pitch line 14.

As shown in Figure 1, each half of the tooth at opposite sides of the axis 13 includes a concave root surface 16 defined by an arc of a circle, the radius of which is centered on a point 17. The bottom, or outer end, of the root surface defines a belt land line 18. As shown in Figure 1, the arc center 17 is spaced inwardly from the belt land line.

A convex power transmitting surface 19 extends inwardly from the root surface 16 and is defined by an arc of a circle having a radius extending from a point 20 on the pitch line 14.

Each tooth further defines a convex tip surface 21 extending inwardly from the power transmitting surface 19. The tip surface is defined by an arc of a circle having a radius centered on a point 22 in the tooth 12 spaced inwardly from the belt land line 18 and from the tooth axis 13, as seen in Figure 1. The radius of the arc 21 is smaller than the radius of the arc 19, as shown.

The width W of the tooth is considered to be the length of the radius of the arc 19, as shown.

The power transmitting surface 19 defines a first junction 23 with the root surface 16. Junction 23 is spaced inwardly from the belt land line 18 approximately one-fourth the height H of the tooth inwardly from the belt land line 18 to a distal end surface 24 thereof.

The inner end of the power transmitting surface 19 defines a second junction 25 with the tip surface 21. Junction 25 is spaced inwardly from the belt land line 18 in the range of approximately one-half to two-thirds the height H of the tooth.

The power transmission surface 19 is substantially tangent to the tip surface 21 at junction 25.

Referring now to Figure 2 and 3, the invention comprehends the provision of the belt 10 in a power transmission toothed belt drive generally designated 26, which further includes a pulley generally designated 27 adapted for cooperation with the toothed belt 10 in providing the improved drive system of the invention.

More specifically, as seen in Figure 2, the pulley defines a plurality of circumferentially radially outwardly opening grooves generally designated 28, each groove being symmetrical about a radial centerline 29. Each groove, at opposite sides of the centerline, includes a convex outer surface 30 defined by an arc of a circle having a radius centered on a point 31. As seen in Figure 2, surface 30 extends inwardly from a face line 32 defined by the distal face of the land 33 between successive pulley grooves 28.

A concave sidewall surface 34 extends inwardly from the outer surface 30 and is defined by a radius centered on a line 35 coincident with the pitch line 14 of the belt when a belt tooth, such as belt tooth 12, is fully meshed with the pulley in the groove 28, as seen in Figure 3.

A concave inner surface 36 extends inwardly from the sidewall surface 34 and is defined by an arc of a circle having a radius centered at a point 37 in the groove 28. As shown in Figure 2, the radius of the arc defining surface 36 is smaller than the radius of the arc defining the sidewall surface 34.

As best seen in Figure 3, the belt tooth 12 and pulley groove 28 are constructed such that the belt tooth root surface 16 has a clearance with the pulley groove outer surface 30, the belt tooth power transmitting surface 19 has facial engagement with the pulley groove sidewall surface 34, and the belt tooth tip surface 21 has a clearance with the pulley groove inner surface 36 inwardly from the sidewall surface 34, when the belt tooth is fully received in the pulley groove, as seen in Figure 3, with the belt tooth power transmitting surface at one side of the tooth engaging the pulley groove sidewall surface 34. As further seen in Figure 3, when thus disposed within the pulley groove, the belt tooth opposite side surface has a clearance with the entire side of the pulley groove surface generally designated 38.

As further shown in Figure 3, the height H of the belt tooth is greater than the depth D of the pulley groove inwardly from the face line 32 so that when the belt tooth is fully received in the pulley groove, the pulley tooth is placed under radial compression. The amount of compression is indicated in Figure 3 by the distance between the dotted line showing of the distal belt tooth surface 24 in the undistorted position and the distal, or bottom, surface 39 at the inner end of the pulley groove. As shown in Figure 2, the pulley groove bottom surface 39 is convex outwardly so that maximum compression of the belt tooth occurs at the centerline 29.

The radius defining arcuate surface 34 is centered on the line 35 at a point 40. Point 40 is substantially coincident with point 20 of the belt, as illustrated in Figure 3, and thus, the radius of the circle defining the belt tooth power transmitting surface is substantially equal to the radius of the circle defining the pulley groove sidewall surface 34. The invention comprehends that the radius of the circle defining the belt tooth power transmitting surface may be larger than the radius of the circle defining the pulley groove sidewall surface, within the broad scope of the invention.

The radius of the circle defining the pulley groove inner surface 36 is greater than the radius of the circle defining the belt tooth tip surface 21, in the illustrated embodiment.

As further shown in Figure 3, the point 31, defining the center of the arc 30, is spaced from the face line 32 and from the centerline 29 of the groove a distance greater than the spacing of the point 17 from the belt land line 18 and centerline 13 of the pulley tooth.

Thus, when the tooth 12 is meshed with the pulley, as seen in Figure 3, a clearance results between the pulley groove outer surface 30 and the belt tooth root surface 16, the belt tooth power transmitting surface 19 is in facial engagement with the pulley groove sidewall surface 34, and a clearance is provided between the belt tooth tip surface 21 and the pulley groove inner surface 36. With such a construction, the drive 26 provides smooth engagement and disengagement between the belt tooth and pulley groove surfaces in the operation of the drive system, while effectively minimizing noise in the operation thereof, including at high loads.

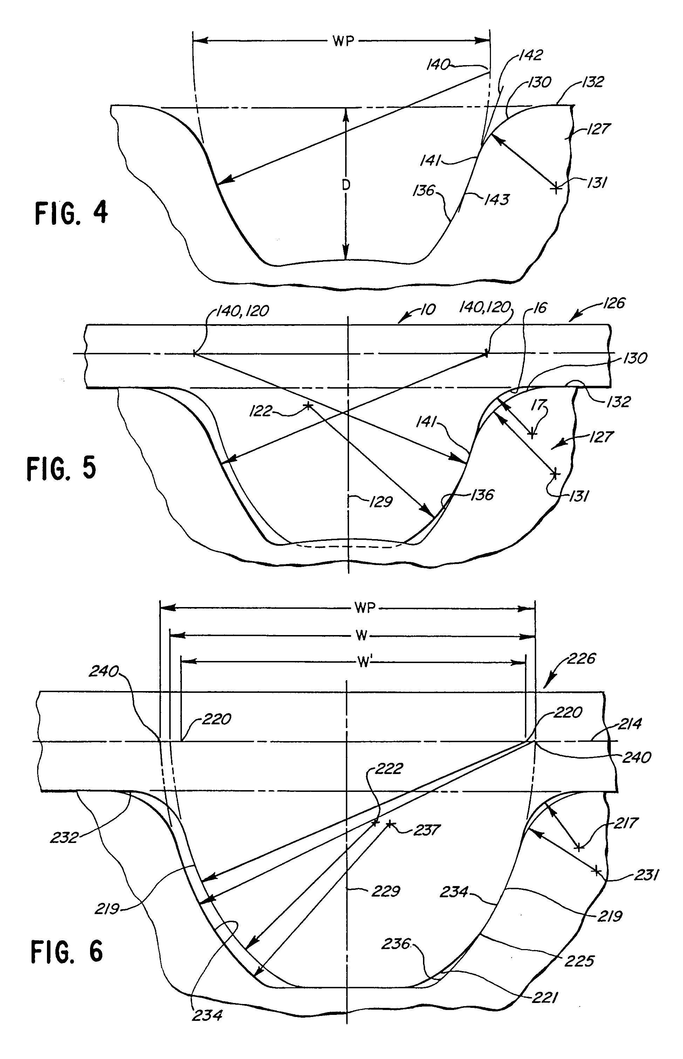

A modified form of toothed belt power transmission drive generally designated 126 is illustrated in Figure 5. Drive 126 utilizes the toothed belt 10, but includes a modified form of pulley generally designated 127. Pulley 127 is generally similar to pulley 27 but, as shown in Figure 4, includes a planar surface 141 extending inwardly from the convex outer surface 130. The planar surface is defined by a tangent 142 to a concave sidewall inner surface 136 at a point 143 spaced inwardly from the face line 132 substantially one-half the depth of the pulley groove. As further shown in Figure 4, the center 131 of the arc defining the convex outer surface 130 is spaced from the face line 132 more than one-half the depth D of the pulley groove.

As seen in Figure 5, the center 131 of the pulley outer surface arc is spaced from the pulley groove radial centerline 129 and the face line 132 a distance greater than the spacing of the center 17 of the belt tooth concave root surface 16 from the pulley groove radial centerline 129 and the face line 132, respectively.

When the radius of arcuate surface 130 is relatively small, the pulley side surface includes a relatively larger planar surface 141 than when the radius of the pulley surface 132 is larger and a portion of the power transmitting surface 19 of the belt tooth may engage the pulley groove surface 130 at the inner end thereof.

In the drive 126, the power transmitting surface 19 of the pulley tooth may be slightly deformed by its engagement with the planar surface 141 and/or inner end of the arcuate outer surface 130. It has been found that such an engagement between the pulley tooth and surface of the pulley groove also provides for improved smooth engagement and disengagement of the belt tooth with the pulley in the operation of the drive and with minimum noise.

The provision of the belt tooth with a height greater than the depth of the pulley groove effects a compressive engagement of the belt tooth with the bottom of the pulley groove prior to the engagement of the belt land surface 18 with the outer face of the land between the successive pulley grooves, thereby effectively eliminating noise as results in the conventional construction wherein these two surfaces are engaged abruptly.

Further, the controlled facial engagement of the pulley tooth with a portion of the side surface of the pulley groove has been found to provide improved efficiency in the transmission of power.

The provision of the clearance between the belt tooth and the side surface of the pulley groove opposite the side engaged by the belt tooth permits for facilitated flexing of the tooth during movement from the pulley, thereby further providing long, troublefree, low noise life of the drive system. Further, as a result of the elimination of substantial stresses during the engagement and disengagement of the belt tooth with the pulley, cracking at the belt tooth root is effectively minimized.

Referring now to the embodiment of Figure 6, a further modified form of power transmission drive system 226 is shown to include a drive system generally similar to drive system 26, but wherein an increased extent of the power transmitting surface 219 of the belt tooth is provided by spacing the junction 225 between the power transmitting surface 219 and tip surface 221 of the belt tooth from the face line 232 approximately two-thirds of the height of the belt tooth. As shown in Figure 6, the width W of the belt tooth is slightly smaller than the width WP of the pulley groove. Further, the width W′ between the opposite points 220 on the pitch line 214, on which the power transmitting surfaces 219 at opposite sides of the belt tooth are centered, is less than the width W of the belt.

In the drive 226, the height of the belt tooth is substantially equal to the depth of the pulley groove.

Thus, as shown in Figure 6, arc centers 220 and 240 are spaced on the pitch line 214, arc centers 222 and 237 are spaced apart relative to the centerline 229, and arc centers 217 and 231 are spaced apart relative to both the face line 232 and the centerline 229.

The drive system 226 has been found to provide improved long, troublefree life, with minimum noise as a result of the provision of the clearances between the root portion of the belt tooth and the confronting outer surface of the pulley groove and the tip surface of the belt tooth and the inner surface of the pulley grove, while yet providing a substantial area of force transmitting engagement between the belt tooth and pulley groove surface intermediate the clearances.

## Claims

1. A power transmission toothed belt drive (26, 126, 226) comprising:
a belt body (11);
a plurality of longitudinally spaced teeth (12) projecting inwardly from said body (11), each tooth (12) being symmetrical about an axis (13) perpendicular to said pitch line (14, 214), each half of each tooth (12) having:
(i) a concave root surface (16) defined by an arc of a circle, the bottom of the root surface (16) defining a belt land line (18),
(ii) a convex power transmitting surface (19, 219) extending inwardly from said root surface (16) and being defined by an arc of a circle having a radius centered on said pitch line (14, 214), and
(iii) a convex tip surface (21, 221) extending inwardly from said power transmitting surface (19, 219) and being defined by an arc of a circle having a radius centered in the tooth (12) and being smaller than said radius of the circle defining said power transmitting surface (19, 219); and
a pulley (27, 127) having a plurality of circumferential radially outwardly opening grooves (28), each groove (28) being symmetrical, each half of each groove (28) having:
(i) a convex outer surface (30, 130) defined by an arc of a circle extending inwardly from a radially outer face line (32, 132, 232) defined by the distal face of a land (33) between successive pulley grooves (28),
(ii) a concave sidewall surface (34) extending inwardly from said outer surface (30, 130) and being defined by a radius centered on a line coincident with said pitch line (14, 214) of the belt (10) when the belt tooth (12) is fully meshed with the pulley (27, 127) in the groove (28), and
(iii) a concave inner surface (36, 136) extending inwardly from said sidewall surface (34) and being defined by an arc of a circle having a radius centered in the groove (28) and being smaller than said radius of the circle defining said sidewall surface (34);
characterised in that said belt tooth (12) and pulley groove (28) are constructed such that said belt tooth root surface (16) has clearance with said pulley groove outer surface (30, 130), said belt tooth power transmitting surface (19, 219) has facial engagement with said pulley groove sidewall surface (34), and said belt tooth tip surface (21, 221) has clearance with said pulley groove inner surface (36, 136) inwardly from said sidewall surface (34) when the belt tooth (12) is fully received in said pulley groove (28) with said belt tooth power transmitting surface (19, 219) engaging said pulley groove sidewall surface (34).

2. A power transmission toothed belt (10) comprising:
a belt body (11) defining a longitudinal pitch line (14, 214); and
a plurality of longitudinally spaced teeth (12) projecting inwardly from said body (11), each tooth (12) being symmetrical about an axis (13) perpendicular to said pitch line (14, 214), each half of each tooth (12) having:
(i) a concave root surface (16) defined by an arc of a circle, the bottom of the root surface (16) defining a belt land line (18),
(ii) a convex power transmitting surface (19, 219) extending inwardly from said root surface (16) and being defined by an arc of a circle having a radius centered on said pitch line (14, 214), and
(iii) a convex tip surface (21, 221) extending inwardly from said power transmitting surface (19, 219) and being defined by an arc of a circle having a radius centered in the tooth (12) and being smaller than said radius of the circle defining said power transmitting surface (19, 219):
characterised in that said power transmitting surface (19, 219) defines a junction with said root surface (16) spaced inwardly from said belt land line (18) approximately one-fourth the height of the tooth (12) inwardly from said belt land line (18), and in that said power transmitting surface (19, 219) defines a junction with said tip surface (21, 221) spaced inwardly from said belt land line (18) in the range of approximately one-half to two-thirds the height of the tooth (12) inwardly from said belt land line (18).

3. A belt (10) according to claim 2 wherein said power transmitting surface (19, 219) is substantially tangential to said tip surface (21, 221) at the junction (25, 225) of said power transmitting surface (19, 219) with said tip surface (21, 221) and said tooth (12) is further defined by a flat distal inner end surface (24) extending transversely to the tooth axis (13).

4. A power transmission toothed belt drive (26, 126, 226) comprising:
a belt body (11) defining a longitudinal pitch line (14, 214);
a plurality of longitudinally spaced teeth (12) projecting inwardly from said body (11), each tooth (12) being symmetrical about an axis (13) perpendicular to said pitch line (14, 214), each half of each tooth (12) having:
(i) a concave root surface (16) defined by an arc of a circle, the bottom of the root surface (16) defining a belt land line (18),
(ii) a convex power transmitting surface (19, 219) extending inwardly from said root surface (16) and being defined by an arc of a circle having a radius centered on said pitch line (14, 214), and
(iii) a convex tip surface (21, 221) extending inwardly from said power transmitting surface (19, 219) and being defined by an arc of a circle having a radius centered in the tooth (12) and being smaller than said radius of the circle defining said power transmitting surface (19, 219); and
a pulley (27, 127) having a plurality of circumferential radially outwardly opening grooves (28), each groove (28) being symmetrical, each half of each groove (28) having:
(i) a convex outer surface (30, 130) defined by an arc of a circle extending inwardly from a radially outer face line (32, 132, 232) defined by the distal face of a land (33) between successive pulley grooves (28),
(ii) a planar surface (141) extending inwardly from said convex outer surface (30, 130),
(iii) a concave sidewall surface (34) extending inwardly from said planar surface (141) and being defined by a radius centered on a line coincident with said pitch line (14, 214) of the belt (10) when a belt tooth (12) is fully meshed with the pulley (27, 127) in the groove (28), said planar surface (141) being defined by a tangent to said inner sidewall surface (34) at a point thereon spaced inwardly from said face line (32, 132, 232) substantially one-half the depth of the groove (28) inwardly from said face line (32, 132, 232), and
(iv) a concave inner surface (36, 136) extending inwardly from said sidewall surface (34) and being defined by an arc of a circle having a radius centered in the groove (28) and being smaller than said radius of the circle defining said sidewall surface (34);
characterised in that said belt tooth (12) and pulley groove (28) are constructed such that said belt tooth root surface (16) has clearance with said pulley groove outer surface (30, 130), said belt tooth power transmitting surface (19, 219) has facial engagement with said pulley groove sidewall surface (34), and said belt tooth tip surface (21, 221) has clearance with said pulley groove inner surface (36, 136) inwardly from said sidewall surface (34) when the belt tooth (12) is fully received in said pulley groove (28) with said belt tooth power transmitting surface (19, 219) engaging said pulley groove sidewall surface (34).

5. A belt (10) according to claim 2, wherein the circle radius of the convex power transmitting surface (19, 219) has a length less than the width of the tooth (12) as measured along the pitch line (14, 214) between the intersections therewith of the arcs defining the opposite power transmitting surfaces (19, 219) of the tooth (12).

6. A drive (26, 126, 226) according to claim 1, wherein the circle radius of the convex power transmitting surface (19, 219) has a length less than the width of the tooth (12) as measured along the pitch line (14, 214) between the intersections therewith of the arcs defining the opposite power transmitting surfaces (19, 219) of the tooth (12).

7. A pulley (27, 127) having a plurality of circumferential radially outwardly opening grooves (28), each groove (28) defining a radial centerline (29, 129) and being symmetrical about said centerline (29, 129) the opposite halves of each groove (28) at opposite sides of the centerline (29, 129) each having:
(i) a convex outer surface (30, 130) defined by an arc of a circle extending inwardly from a radially outer face line (32, 132, 232) defined by the distal face of a land (33) between successive pulley grooves (28),
(ii) a concave sidewall surface (34) extending inwardly from said outer surface (30, 130) and being defined by a radius centered on a line coincident with said pitch line (14, 214) of the belt (10) when a belt tooth (12) is fully meshed with the pulley (27, 127) in the groove (28), and
(iii) a concave inner surface (36, 136) extending inwardly from said sidewall surface (34) and being defined by an arc of a circle having a radius centered in the groove (28) and being smaller than said radius of the circle defining said sidewall surface (34).

8. A pulley (27, 127) having a plurality of circumferential radially outwardly opening grooves (28), each groove (28) defining a radial centerline (29, 129) and being symmetrical about said centerline (29, 129), the opposite halves of each groove (28) at opposite sides of the centerline (29, 129) each having:
(i) a convex outer surface (30, 130) defined by an arc of a circle extending inwardly from a radially outer face line (32, 132, 232) defined by the distal face of a land (33) between successive pulley grooves (28),
(ii) a planar surface (141) extending inwardly from said convex outer surface (30, 130),
(iii) a concave sidewall surface (34) extending inwardly from said planar surface (141) and being defined by a radius centered on a line coincident with said pitch line (14, 214) of the belt (10) when a belt tooth (12) is fully meshed with the pulley (27, 127) in the groove (28), said planar surface (141) being defined by a tangent to said inner sidewall surface (34) at a point thereon spaced inwardly from said face line (32, 132, 232) substantially one-half the depth (D) of the groove (28) inwardly from said face line (32, 132, 232), and
(iv) a concave inner surface (36, 136) extending inwardly from said sidewall surface (34) and being defined by an arc of a circle having a radius centered in the groove (28) and being smaller than said radius of the circle defining said sidewall surface (36).

9. A power transmission toothed belt drive (26, 126, 226) comprising:
a belt body (11) defining a longitudinal pitch line (14, 214);
a plurality of longitudinally spaced teeth (12) projecting inwardly from said body (11), each tooth (12) being symmetrical about an axis (13) perpendicular to said pitch line (14, 214), each half of each tooth (12) having:
(i) a concave root surface (16) defined by an arc of a circle, the bottom of the root surface (16) defining a belt land line (18),
(ii) a convex power transmitting surface (19, 219) extending inwardly from said root surface (16) and being defined by an arc of a circle having a radius centered on said pitch line (14, 214), and
(iii) a convex tip surface (21, 221) extending inwardly from said power transmitting surface (19, 219) and being defined by an arc of a circle having a radius centered in the tooth (12) and being smaller than said radius of the circle defining said power transmitting surface (19, 219); and
a pulley (27, 127) having a plurality of circumferential radially outwardly opening grooves (28), each groove (28) being symmetrical, each half of each groove (28) having:
(i) a convex outer surface (30, 130) defined by an arc of a circle extending inwardly from a radially outer face line (32, 132, 232) defined by the distal face of a land (33) between successive pulley grooves (28),
(ii) a planar surface (141) extending inwardly from said convex outer surface (30, 130),
(iii) a concave sidewall surface (34) and a concave inner surface (36) extending inwardly from said planar surface (141) and being defined by a radius centered on a line coincident with said pitch line (14, 214) of the belt (10) when a belt tooth (12) is fully meshed with the pulley (27, 127) in the groove (28), said planar surface (141) being defined by a tangent to said sidewall surface (34) at a point thereon spaced inwardly from said face line (32, 132,232) substantially one-half the depth of the groove (28) inwardly from said face line (32, 132, 232);
characterised in that said belt tooth (12) and pulley groove (28) are constructed such that said tooth root surface (16) has clearance with said pulley groove outer surface (30, 130), said belt tooth power transmitting surface (19, 219) has facial engagement with said pulley groove sidewall surface (34), and said belt tooth tip surface (21, 221) has clearance with said pulley groove inner surface (36, 136) inwardly from said sidewall surface (34) when the belt tooth (12) is fully received in said pulley groove (28) with said belt tooth power transmitting surface (19, 219) engaging said pulley groove sidewall surface (34).

## Patentansprüche

1. Zahnriemen-Treibantrieb (26, 126, 226), umfassend einen Riemenkörper (11);
eine Anzahl in Längsrichtung beabstandeter Zähne (12), die vom Körper (11) nach innen stehen, wobei jeder Zahn (12) symmetrisch ist um eine zur Teillinie (14, 214) senkrechten Achse (13), wobei jede Hälfte eines jeden Zahns (12) (i) eine konkave Fußfläche (16) hat, die von einem Kreisbogen bestimmt wird, wobei der Boden der Fußfläche (16) eine Riemengrundlinie (18) bestimmt, (ii) eine konvexe Treibfläche (19, 219) hat, die von der Fußfläche (16) nach innen läuft und bestimmt wird von einem Kreisbogen mit einem Radius, dessen Mittelpunkt auf der Teillinie (14, 214) liegt, und (iii) eine konvexe Spitzenfläche (21, 221) hat, die von der Treibfläche (19, 219) nach innen läuft und bestimmt wird von einem Kreisbogen mit einem Radius, dessen Mittelpunkt im Zahn (12) liegt und der kleiner ist als der Kreisradius der Treibfläche (19, 219); und
eine Scheibe (27, 127) mit einer Anzahl kreisförmiger, radial nach außen offener Nuten (28), wobei jede Nut (28) symmetrisch ist und jede Hälfte einer jeden Nut (28) (i) eine konvexe Außenfläche (30, 130) hat, die von einem Kreisbogen bestimmt wird, der von einer radialen, äußeren Vorderlinie (32, 132, 232), die von der distalen Seite eines Grunds (33) zwischen aufeinanderfolgender Scheibennuten (28) bestimmt wird, nach innen läuft, (ii) eine konkave Seitenwandfläche (34) hat, die von der Außenfläche (30, 130) nach innen läuft und bestimmt wird von einem Radius, dessen Mittelpunkt auf einer Linie liegt, die zusammenfällt mit der Teillinie (14, 214) des Riemens (10), wenn der Riemenzahn (12) mit der Scheibe (27, 127) in der Nut (28) voll im Eingriff ist, und (iii) eine konkave Innenfläche (36, 136) hat, die von der Seitenwandfläche (34) nach innen läuft und bestimmt wird von einem Kreisbogen mit einem Radius, dessen Mittelpunkt in der Nut (28) liegt und der kleiner ist als der Kreisradius der Seitenwandfläche (34),
dadurch gekennzeichnet, daß der Riemenzahn (12) und die Scheibennut (28) so ausgeführt sind, daß die Riemenzahn-Fußfläche (16) Spiel hat zur Scheibennut-Außenfläche (30, 130), wobei die Riemenzahn-Treibfläche (19, 219) in frontalem Eingriff ist mit der Scheibennut-Seitenwandfläche (34), und die Riemenzahn-Spitzenfläche (21, 221) zur Scheibennut-Innenfläche (36, 136) innenseitig der Seitenwandfläche (34) ein Spiel hat, wenn der Riemenzahn (12) in der Scheibennut (28) voll aufgenommen ist und die Riemenzahn-Treibfläche (19, 219) mit der Scheibennut-Seitenwandfläche (34) eingreift.

2. Treibzahnriemen (10), beinhaltend einen Riemenkörper (11), der in Längsrichtung eine Teillinie (14, 214) bestimmt;
eine Anzahl in Längsrichtung beabstandeter Zähne (12), die vom Körper (11) nach innen stehen, wobei jeder Zahn (12) symmetrisch ist um eine zur Teillinie (14, 214) senkrechten Achse, wobei eine jede Hälfte von jedem Zahn (12)
(i) eine konkave Fußfläche (16) hat, die von einem Kreisbogen bestimmt wird, wobei der Boden der Fußfläche (16) eine Riemengrundlinie (18) bestimmt;
(ii) eine konvexe Treibfläche (19, 219) hat, die von der Fußfläche (16) nach innen läuft und von einem Kreisbogen bestimmt wird, dessen Radiusmittelpunkt auf der Teillinie (14, 214) liegt, und
(iii) eine konvexe Spitzenfläche (21, 221) hat, die von der Treibfläche (19, 219) nach innen läuft und bestimmt wird von einem Kreisbogen mit einem Radius, dessen Mittelpunkt im Zahn (12) liegt und der kleiner ist als der Kreisradius, der die Treibfläche (19, 219) bildet, dadurch gekennzeichnet,
daß die Treibfläche (19, 219) einen Übergang bestimmt mit der Fußfläche (16), der innen zur Riemengrundlinie (18) einen Abstand hat von etwa einem Viertel der Höhe des Zahns (12) innen von der Riemengrundlinie (18); und
daß die Treibfläche (19, 219) einen Übergang bestimmt mit der Spitzenfläche (21, 221), der innen zur Riemengrundlinie (18) einen Abstand hat im Bereich von etwa einer Halben oder zwei Drittel der Höhe des Zahns (12) innen von der Riemengrundlinie (18).

3. Riemen (10) gemäß Anspruch 2, wobei an dem Übergang (25, 225) von Treibfläche (19, 219) zur Spitzenfläche (21, 221) die Treibfläche (19, 219) im wesentlichen tangential zur Spitzenfläche (21, 221) ist und der Zahn (12) zudem bestimmt wird von einer flachen, distalen, inneren Stirnfläche (24), die quer zur Zahnachse (13) läuft.

4. Treibzahnriemenantrieb (26, 126, 226), umfassend einen Riemenkörper (11), der in Längsrichtung eine Teillinie (14, 214) bestimmt,
eine Anzahl in Längsrichtung beabstandeter Zähne (12), die vom Körper (11) nach innen stehen, wobei jeder Zahn (12) symmetrisch ist um eine Achse (13) senkrecht zur Teillinie (14, 214), wobei jede Hälfte von jedem Zahn (12)
(i) eine konkave Fußfläche (16) hat, die von einem Kreisbogen gebildet wird, wobei der Boden der Fußfläche (16) eine Riemengrundlinie (18) bildet,
(ii) eine konvexe Treibfläche (19, 219) hat, die von der Fußfläche (16) nach innen läuft und bestimmt wird von einem Kreisbogen, dessen Radiusmittelpunkt auf der Teillinie (14, 214) liegt, und
(iii) eine konvexe Spitzenfläche (21, 221) hat, die von der Treibfläche (19, 219) nach innen läuft und bestimmt wird von einem Kreis mit einem Radius, dessen Mittelpunkt im Zahn (12) liegt und der kleiner ist als der Kreisradius der Treibfläche (19, 219), sowie
eine Scheibe (27, 127) mit einer Anzahl kreisförmiger, radial nach außen offener Nuten (28), wobei jede Nut (28) symmetrisch ist und jede Hälfte einer jeden Nut (28)
(i) eine konvexe Außenfläche (30, 130) hat, die bestimmt wird von einem Kreisbogen, der von einer radialen, äußeren Seitenlinie (32, 132, 232), bestimmt von der distalen Seite eines Grunds (33) zwischen aufeinanderfolgenden Scheibennuten (28), nach innen läuft,
(ii) eine ebene Fläche (141) hat, die von der konvexen Außenfläche (30, 130) nach innen läuft,
(iii) eine konkave Seitenwandfläche (34) hat, die von der ebenen Fläche (141) nach innen läuft und von einen Radius bestimmt wird, dessen Mittelpunkt auf einer Linie liegt, die mit der Teillinie (14, 214) des Riemens (10) zusammenfällt, wenn ein Riemenzahn (12) mit der Scheibe (27, 127) in der Nut (28) voll im Eingriff ist, wobei die ebene Fläche (141) bestimmt wird von einer Tangente zu einem Punkt auf der inneren Seitenwandfläche (34), der innen zur Vorderlinie (32, 132, 232) einen Abstand hat von im wesentlichen einer halben Tiefe der Nut (28) innen von der Vorderlinie, und
(iv) eine konkave Innenfläche (36, 136) hat, die von der Seitenwandfläche (34) nach innen läuft und bestimmt wird von einem Kreisbogen mit einem Radius, dessen Mittelpunkt in der Nut (28) liegt und der kleiner ist als der Kreisradius der Seitenwandfläche (34),
dadurch gekennzeichnet, daß der Riemenzahn (12) und die Scheibennut (28) so ausgeführt sind, daß die Riemenzahn-Fußfläche (16) ein Spiel hat zur Scheibennutaußenfläche (30, 130), wobei die Riemenzahn-Treibfläche (19, 219) in frontalem Eingriff ist mit der Scheibennut-Seitenwandfläche (34) und die Riemenzahn-Spitzenfläche (21, 221) zur Scheibennut-Innenfläche (36, 136) innen von der Seitenwandfläche (34) ein Spiel hat, wenn der Riemenzahn (12) in der Scheibennut (28) voll aufgenommen ist und die Riemenzahn-Treibfläche (19, 219) im Eingriff ist mit der Scheibennut-Seitenwandfläche (34).

5. Riemen (10) gemäß Anspruch 2, wobei der Kreisradius der konvexen Treibfläche (19, 219) weniger groß ist als der Zahn (12) breit, wenn gemessen wird auf der Teillinie (14, 214) zwischen deren Schnittstellen mit den Bögen, die die entgegengesetzen Treibflächen (19, 219) des Zahns (12) bilden.

6. Antrieb (26, 126, 226) nach Anspruch 1, wobei der Kreisradius der konvexen Treibfläche (19, 219) weniger lang ist als der Zahn (12) breit, wenn gemessen wird auf der Teillinie (24, 214) zwischen deren Schnittstellen mit den Bögen, die die entgegengesetzten Treibflächen (19, 219) des Zahns (12) bestimmen.

7. Riemenscheibe (27, 127) mit einer Anzahl kreisförmiger, radial nach außen offener Nuten (28), wobei jede Nut (28) eine radiale Mittenlinie (29, 129) bestimmt, symmetrisch ist um die Mittenlinie (29, 129) und die gegenüberliegenden Hälften einer jeden Nut (28) auf den entgegengesetzten Seiten der Mittenlinie (29, 129) jeweils:
(i) eine konvexe Außenfläche (30, 130) hat, die von einem Kreisbogen bestimmt wird, der von einer radialen äußeren Vorderlinie (32, 132, 232), die bestimmt wird von der distalen Seite eines Grunds (33) zwischen aufeinanderfolgenden Scheibennuten (28), nach innen läuft,
(ii) eine konkave Seitenwandfläche (34) hat, die von der Außenfläche (30, 130) nach innen läuft und bestimmt wird von einem Radius, dessen Mittelpunkt auf einer Linie liegt, die mit der Teillinie (14, 214) des Riemens (10) zusammenfällt, wenn ein Riemenzahn (12) mit der Riemenscheibe (27, 127) in der Nut (28) voll im Eingriff ist, und
(iii) eine konkave Innenfläche (36, 136) hat, die von der Seitenwandfläche (34) nach innen läuft und bestimmt wird von einem Kreisbogen mit einem Radius, dessen Mittelpunkt in der Nut (28) liegt und der kleiner ist als der Kreisradius der Seitenwandfläche (34).

8. Riemenscheibe (27, 127) mit einer Anzahl kreisförmiger, radial nach außen offener Nuten (28), wobei jede Nut (28) eine radiale Mittenlinie (29, 129) bestimmt, symmetrisch ist um die Mittenlinie (29, 129) und jede entgegengesetzte Hälfte einer jeden Nut (28) an den gegenüberliegenden Seiten der Mittenlinie (29, 129) jeweils
(i) eine konvexe Außenfläche (30, 130) hat, die bestimmt wird von einem Kreisbogen, der von einer radialen, äußeren Vorderlinie (32, 132, 232), die bestimmt wird von der distalen Seitenfläche eines Grunds (33) zwischen aufeinanderfolgenden Scheibennuten (28), nach innen läuft;
(ii) eine ebene Fläche (141) hat, die von der konvexen Außenfläche (30, 130) nach innen läuft,
(iii) eine konkave Seitenwandfläche (34) hat, die von der ebenen Außenfläche (30, 130) nach innen läuft und bestimmt wird von einem Radius, dessen Mittelpunkt auf einer Linie liegt, die mit der Teillinie (14, 214) des Riemens (10) zusammenfällt, wenn ein Riemenzahn (12) mit der Riemenscheibe (27, 127) in der Nut (28) voll im Eingriff ist, wobei die ebene Fläche (141) bestimmt wird von einer Tangente zu einem Punkt auf der inneren Seitenwandfläche (34), der innen von der Vorderlinie (32, 132, 232) einen Abstand hat von im wesentlichen einer halben Tiefe (D) der Nut (28) innen von der Vorderlinie (32, 132, 232), und
(iv) eine konkave Innenfläche (36, 136) hat, die innenseitig der Seitenwandfläche (34) verläuft und bestimmt wird von einem Kreisbogen mit einem Radius, dessen Mittelpunkt in der Nut (28) liegt und der kleiner ist als der Kreisradius der Seitenwandfläche (36).

9. Zahnriemen-Treibantrieb (26, 126, 226), umfassend einen Riemenkörper (11), der in Längsrichtung eine Teillinie (14, 214) bestimmt,
eine Anzahl in Längsrichtung beabstandeter Zähne (12), die von dem Körper (11) nach innen stehen, wobei jeder Zahn (12) um eine zur Achse (13) senkrechten Teillinie (14, 214) symmetrisch ist, wobei jede Hälfte eines jeden Zahnes (12)
(i) eine konkave Fußfläche (16) hat, die von einem Kreisbogen bestimmt wird, wobei der Boden der Fußfläche (16) eine Riemengrundlinie (18) bestimmt,
(ii) eine konvexe Treibfläche (19, 219) hat, die von der Fußfläche (16) nach innen läuft und bestimmt wird von einem Kreisbogen mit einem Radius, dessen Mittelpunkt auf der Teillinie (14, 214) liegt, und
(iii) eine konvexe Spitzenfläche (21, 221) hat, die von der Treibfläche (19, 219) nach innen läuft und bestimmt wird von einem Kreisbogen mit einem Radius, dessen Mittelpunkt im Zahn (12) liegt und der kleiner ist als der Kreisradius der Treibfläche (19, 219); und
eine Scheibe (27, 127) mit einer Anzahl kreisförmiger, radial nach außen offener Nuten (28), wobei jede Nut (28) symmetrisch ist und jede Hälfte einer jeden Nut (28)
(i) eine konvexe Außenfläche (30, 130) hat, die von einem Kreisbogen bestimmt wird, der von einer radialen, äußeren Vorderlinie (32, 132, 232), bestimmt von der distalen Seite eines Grunds (33) zwischen aufeinanderfolgenden Riemennuten (28), nach innen läuft,
(ii) eine ebene Oberfläche (141) hat, die sich von der konvexen Außenfläche (30, 130) nach innen läuft,
(iii) eine konkave Seitenwandfläche (34) und eine konkave Innenfläche (36) hat, die von der ebenen Oberfläche (141) nach innen läuft und bestimmt wird von einem Radius, dessen Mittelpunkt auf einer Linie liegt, die mit der Teillinie (14, 214) des Riemens (10) zusammenfällt, wenn ein Riemenzahn (12) mit der Scheibe (27, 127) in der Nut voll im Eingriff ist, wobei die ebene Oberfläche (141) bestimmt wird von einer Tangente zu einem Punkt auf der Seitenwandfläche (34), der nach innen von der Vorderlinie (32, 132, 232) einen Abstand hat von im wesentlichen einer halben Tiefe der Nut (28) innen von der Vorderlinie (32, 132, 232),
dadurch gekennzeichnet, daß der Riemenzahn (12) und die Scheibennut (28) so ausgeführt sind, daß die Zahnfußfläche (16) ein Spiel hat zur Scheibennut-Außenfläche (30, 130), wobei die Riemenzahn-Treibfläche (19, 219) in frontalem Eingriff ist mit der Riemennut-Seitenwandfläche (34) und daß die Riemenzahn-Spitzenfläche (21, 221) zur Scheibennut-Innenfläche (36, 136) innenseitig der Seitenwandfläche (34) ein Spiel hat, wenn der Riemenzahn in der Scheibennut (28) voll im Eingriff ist mit der Riemenzahn-Treibfläche (19, 219), die mit der Scheibennut-Seitenwandfläche (34) eingreift.

## Revendications

1. Mécanisme à courroie crantée de transmission de force motrice (26, 126, 226) comprenant
un corps de courroie (11),
plusieurs dents (12) espacées suivant la direction longitudinale et faisant saillie sur le corps (11) vers l'intérieur, chaque dent (12) étant symétrique par rapport à un axe (13) perpendiculaire à la ligne de pas (14, 214), chaque moitié de chaque dent (12) comprenant :
(i) une surface concave de pied (16) définie par un arc de cercle, la base de la surface de pied (16) définissant une ligne de plat de courroie (18),
(ii) une surface convexe de transmission de force motrice (19, 219), qui s'étend vers l'intérieur à partir de la surface de pied (16) et qui est définie par un arc de cercle dont le rayon est centré sur la ligne de pas (14, 214), et
(iii) une surface convexe de tête (21, 221), qui s'étend vers l'intérieur à partir de la surface de transmission de force motrice (19, 219) et qui est définie par un arc de cercle dont le rayon est centré dans la dent (12) et est inférieur au rayon du cercle définissant la surface de transmission de force motrice (19, 219), et
une poulie (27, 127) comportant plusieurs rainures (28) qui s'ouvrent radialement vers l'extérieur sur sa surface périphérique extérieure, chaque rainure (28) étant symétrique, chaque moitié de chaque rainure (28) comportant :
(i) une surface convexe extérieure (30, 130), définie par un arc de cercle et s'étendant vers l'intérieur à partir d'une ligne de face radialement extérieure (32, 132, 232) définie par la face distale d'un plat (33) situé entre des rainures de poule (28) successives,
(ii) une surface concave de paroi latérale (34) s'étendant vers l'intérieur à partir de la surface extérieure (30, 130) et définie par rayon centré sur une ligne coïncidant avec la ligne de pas (14, 214) de la courroie (10) lorsque la dent de courroie (12) engrène totalement avec la poulie (27, 127), dans la rainure (28), et
(iii) une surface intérieure concave (36, 136) s'étendant vers l'intérieur à partir de la surface de paroi latérale (34) et définie par un arc de cercle dont le rayon est centré dans la rainure (28) et est inférieur au rayon du cercle définissant la surface de paroi latérale (34),
caractérisé en ce que la dent de courroie (12) et la rainure de poulie (28) ont une configuration telle que la surface de pied (16) de la dent de courroie présente un jeu vis-à-vis de la surface extérieure (30, 130) de la rainure de poulie, la surface de transmission de force motrice (19, 219) de la dent de courroie étant en contact face à face avec la surface de paroi latérale (34) de la rainure de poulie, tandis que la surface de tête (21, 221) de la dent de courroie présente un jeu vis-à-vis de la surface intérieure (36, 136) de la rainure de poulie, vers l'intérieur à partir de la surface de paroi latérale(34), lorsque la dent de courroie (12) est totalement logée dans la rainure de poulie (28), avec la surface de transmission de force motrice (19, 219) de la dent de courroie au contact de la surface de paroi latérale (34) de la rainure de poulie.

2. Courroie crantée de transmission de force motrice (10) comprenant :
un corps de courroie (11) définissant une ligne de pas longitudinale (14, 214) et
plusieurs dents (12) espacées suivant la direction longitudinale et faisant saillie sur le corps (11) vers l'intérieur, chaque dent (12) étant symétrique par rapport à un axe (13) perpendiculaire à la ligne de pas (14, 214), chaque moitié de chaque dent (12) comprenant :
(i) une surface concave de pied (16) définie par un arc de cercle, la base de la surface de pied (16) définissant une ligne de plat de courroie (18),
(ii) une surface convexe de transmission de force motrice (19, 219), qui s étend vers l'intérieur à partir de la surface de pied (16) et qui est définie par un arc de cercle dont le rayon est centré sur la ligne de pas (14, 214), et
(iii) une surface convexe de tête (21, 221), qui s'étend vers l'intérieur à partir de la surface de transmission de force motrice (19, 219) et qui est définie par un arc de cercle dont le rayon est centré dans la dent (12) et est inférieur au rayon du cercle définissant la surface de transmission de force motrice (19, 219),
caractérisée en ce que la surface de transmission de force motrice (19, 219) définit avec la surface de pied (16) une jonction qui est espacée de la ligne de plat de courroie (18), vers l'intérieur, d'approximativement un quart de la hauteur de la dent (12) vers l'intérieur à partir de la ligne de plat de courroie (18) et en ce que la surface de transmission de force motrice (19, 219) définit avec la surface de tête (21, 221) une jonction qui est espacée de la ligne de plat de courroie (18), vers l'intérieur, d'une distance qui est comprise entre approximativement la moitié et les deux tiers de la hauteur de la dent (12) vers l'intérieur à partir de la ligne de plat de courroie (18).

3. Courroie (10) selon la revendication 2, dans laquelle la surface de transmission de force motrice (19, 219) est pratiquement tangente à la surface de tête (21, 221) à l'endroit de la ]onction (25, 225) de la surface de transmission de force motrice (19, 219) avec la surface de tête (21, 221), tandis que la dent (12) est en outre définie par une surface d'extrémité intérieure distale (24) qui est plate et s'étend transversalement à l'axe (13) de la dent.

4. Mécanisme à courroie crantée de transmission de force motrice (26, 126, 226) comprenant :
un corps de courroie (11) définissant une ligne de pas longitudinale (14, 214),
plusieurs dents (12) espacées suivant la direction longitudinale et faisant saillie sur le corps (11) vers l'intérieur, chaque dent (12) étant symétrique par rapport à un axe (13) perpendiculaire à la ligne de pas (14, 214), chaque moitié de chaque dent (12) comprenant :
(i) une surface concave de pied (16) définie par un arc de cercle, la base de la surface de pied (16) définissant une ligne de plat de courroie (18),
(ii) une surface convexe de transmission de force motrice (19, 219), qui s'étend vers l'intérieur à partir de la surface de pied (16) et qui est définie par un arc de cercle dont le rayon est centré sur la ligne de pas (14, 214), et
(iii) une surface convexe de tête (21, 221), qui s'étend vers l'intérieur à partir de la surface de transmission de force motrice (19, 219) et qui est définie par un arc de cercle dont le rayon est centré dans la dent (12) et est inférieur au rayon du cercle définissant la surface de transmission de force motrice (19, 219), et
une poulie (27, 127) comportant plusieurs rainures (28) qui s'ouvrent radialement vers l'extérieur sur sa surface périphérique extérieure, chaque rainure (28) étant symétrique, chaque moitié de chaque rainure (28) comportant :
(i) une surface convexe extérieure (30, 130), définie par un arc de cercle et s'étendant vers l'intérieur à partir d'une ligne de face radialement extérieure (32, 132, 232) définie par la face distale d'un plat (33) situé entre des rainures de poulie (28) successives,
(ii) une surface plane (141) s'étendant vers l'intérieur à partir de la surface convexe extérieure (30, 130),
(iii) une surface concave de paroi latérale (34) s'étendant vers l'intérieur à partir de la surface plane (141) et définie par un rayon centré sur une ligne coïncidant avec la ligne de pas (14, 214) de la courroie (10) lorsque la dent de courroie (12) engrène totalement avec la poulie (27, 127), dans la rainure (28), la surface plane (141) étant définie par une tangente à la surface intérieure de paroi latérale (34) en un point de cette surface qui est espacé de la ligne de face (32, 132, 232), vers l'intérieur, pratiquement de la moitié de la profondeur de la rainure (28) vers l'intérieur à partir de la ligne de face (32, 132, 232), et
(iv) une surface intérieure concave (36, 136) s'étendant vers l'intérieur à partir de la surface de paroi latérale (34) et définie par un arc de cercle dont le rayon est centré dans la rainure (28) et est inférieur au rayon du cercle définissant la surface de paroi latérale (34),
caractérisé en ce que la dent de courroie (12) et la rainure de poulie (28) ont une configuration telle que la surface de pied (16) de la dent de courroie présente un jeu vis-à-vis de la surface extérieure (30, 130) de la rainure de poulie, la surface de transmission de force motrice (19, 219) de la dent de courroie est en contact face à face avec la surface de paroi latérale (34) de la rainure de poulie, tandis que la surface de tête (21, 221) de la dent de courroie présente un jeu vis-à-vis de la surface intérieure (36, 136) de la rainure de poulie, vers l'intérieur à partir de la surface de paroi latérale (34), lorsque la dent de courroie (12) est totalement logée dans la rainure de poulie (28), avec la surface de transmission de force motrice (19, 219) de la dent de courroie au contact de la surface de paroi latérale (34) de la rainure de poulie.

5. Courroie (10) selon la revendication 2, dans laquelle lequel le rayon du cercle de la surface convexe de transmission de force motrice (19, 219) a une longueur inférieure à la largeur de la dent (12) mesurée le long de la ligne de pas (14, 214) entre les intersections de cette ligne avec les arcs définissant les surfaces de transmission de force motrice (19, 219) opposées de la dent (12).

6. Mécanisme (26, 126, 226) selon la revendication 1, dans lequel le rayon du cercle de la surface convexe de transmission de force motrice (19, 219) a une longueur inférieure à la largeur de la dent (12) mesurée le long de la ligne de pas (14, 214) entre les intersections de cette ligne avec les arcs définissant les surfaces de transmission de force motrice (19, 219) opposées de la dent (12).

7. Poulie (27, 127) comportant plusieurs rainures (28) qui s'ouvrent radialement vers l'extérieur sur sa surface périphérique extérieure, chaque rainure (28) définissant une ligne centrale diamétrale (29, 129) et étant symétrique par rapport à cette ligne centrale (29, 129), les moitiés opposées de chaque rainure (28) qui sont situées de part et d'autre de la ligne centrale (29, 129) comportant chacune :
(i) une surface convexe extérieure (30, 130), définie par un arc de cercle et s'étendant vers l'intérieur à partir d'une ligne de face radialement extérieure (32, 132, 232) définie par la face distale d'un plat (33) situé entre des rainures de poulie (28) successives,
(ii) une surface concave de paroi latérale (34) s'étendant vers l'intérieur à partir de la surface extérieure (30, 130) et définie par rayon centré sur une ligne coïncidant avec la ligne de pas (14, 214) de la courroie (10) lorsque la dent de courroie (12) engrène totalement avec la poule (27, 127), dans la rainure (28), et
(iii) une surface intérieure concave (36, 136) s'étendant vers l'intérieur à partir de la surface de paroi latérale (34) et définie par un arc de cercle dont le rayon est centré dans la rainure (28) et est inférieur au rayon du cercle définissant la surface de paroi latérale (34).

8. Poulie (27, 127) comportant plusieurs rainures (28) qui s'ouvrent radialement vers l'extérieur sur sa surface périphérique extérieure, chaque rainure (28) définissant une ligne centrale diamétrale (29, 129) et étant symétrique par rapport à cette ligne centrale (29, 129), les moitiés opposées de chaque rainure (28) qui sont situées de part et d'autre de la ligne centrale (29, 129) comportant chacune :
(i) une surface convexe extérieure (30, 130), définie par un arc de cercle et s'étendant vers l'intérieur à partir d'une ligne de face radialement extérieure (32, 132, 232) définie par la face distale d'un plat (33) situé entre des rainures de poule (28) successives,
(ii) une surface plane (141) s'étendant vers l'intérieur à partir de la surface convexe extérieure (30, 130),
(iii) une surface concave de paroi latérale (34) s'étendant vers l'intérieur à partir de la surface plane (141) et définie par un rayon centré sur une ligne coïncidant avec la ligne de pas (14, 214) de la courroie (10) lorsque la dent de courroie (12) engrène totalement avec la poulie (27, 127), dans la rainure (28), la surface plane (141) étant définie par une tangente à la surface intérieure de paroi latérale (34) en un point de cette surface qui est espacé de la ligne de face (32, 132, 232), vers l'intérieur, pratiquement d'une moitié de la profondeur (D) de la rainure (28) vers l'intérieur à partir de la ligne de face (32, 132, 232), et
(iv) une surface intérieure concave (36, 136) s'étendant vers l'intérieur à partir de la surface de paroi latérale (34) et définie par un arc de cercle dont le rayon est centré dans la rainure (28) et est inférieur au rayon du cercle définissant la surface de paroi latérale (34).

9. Mécanisme à courroie crantée de transmission de force motrice (26, 126, 226) comprenant :
un corps de courroie (11) définissant une ligne de pas longitudinale (14, 214),
plusieurs dents (12) espacées suivant la direction longitudinale et faisant saillie sur le corps (11) vers l'intérieur, chaque dent (12) étant symétrique par rapport à un axe (13) perpendiculaire à la ligne de pas (14, 214), chaque moitié de chaque dent (12) comprenant :
(i) une surface concave de pied (16) définie par un arc de cercle, la base de la surface de pied (16) définissant une ligne de plat de courroie (18),
(ii) une surface convexe de transmission de force motrice (19, 219), qui s'étend vers l'intérieur à partir de la surface de pied (16) et qui est définie par un arc de cercle dont le rayon est centré sur la ligne de pas (14, 214), et
(iii) une surface convexe de tête (21, 221), qui s'étend vers l'intérieur à partir de la surface de transmission de force motrice (19, 219) et qui est définie par un arc de cercle dont le rayon est centré dans la dent (12) et est inférieur au rayon du cercle définissant la surface de transmission de force motrice (19, 219), et
une poule (27, 127) comportant plusieurs rainures (28) qui s'ouvrent radialement vers l'extérieur sur sa surface périphérique extérieure, chaque rainure (28) étant symétrique, chaque moitié de chaque rainure (28) comportant :
(i) une surface convexe extérieure (30, 130), définie par un arc de cercle et s'étendant vers l'intérieur à partir d'une ligne de face radialement extérieure (32, 132, 232) définie par la face distale d'un plat (33) situé entre des rainures de poulie (28) successives,
(ii) une surface plane (141) s'étendant vers l'intérieur à partir de la surface convexe extérieure (30, 130),
(iii) une surface concave de paroi latérale (34) et une surface concave intérieure (36) s'étendant vers l'intérieur à partir de la surface plane (141) et définie par un arc de cercle centré sur une ligne coïncidant avec la ligne de pas (14, 214) de la courroie (10) lorsque la dent de courroie (12) engrène totalement avec la poulie (27, 127), dans la rainure (28), la surface plane (141) étant définie par une tangente à la surface de paroi latérale (34) en un point de cette surface qui est espacé de la ligne de face (32, 132, 232), vers l'intérieur, pratiquement de la moitié de la profondeur de la rainure (28) vers l'intérieur à partir de la ligne de face (32, 132, 232),
caractérisé en ce que la dent de courroie (12) et la rainure de poulie (28) ont une configuration telle que la surface de pied (16) de la dent présente un jeu vis-à-vis de la surface extérieure (30, 130) de la rainure de poulie, la surface de transmission de force motrice (19, 219) de la dent de courroie est en contact face à face avec la surface de paroi latérale (34) de la rainure de poule, tandis que la surface de tête (21, 221) de la dent de courroie présente un jeu vis-à-vis de la surface intérieure (36, 136) de la rainure de poulie, vers l'intérieur à partir de la surface de paroi latérale(34), lorsque la dent de courroie (12) est totalement logée dans la rainure de poulie (28), avec la surface de transmission de force motrice (19, 219) de la dent de courroie au contact de la surface de paroi latérale (34) de la rainure de poulie.
